# EUROPÄISCHE PATENTANMELDUNG

(11) **EP 4 491 350 A1**
(43) Veröffentlichungstag der Anmeldung: **15.01.2025**
(21) Anmeldenummer: 24187251.4
(22) Anmeldetag: 08.07.2024
(51) Int. Cl.: B25J 9/16

(54) **GREIFSYSTEM ZUM SORTIEREN EINER MEHRZAHL VON WERKSTÜCKEN BASIEREND AUF EINER ROTATIONSKLASSIFIKATION**

(30) Priorität: 07.07.2023 DE 102023118088
(71) Anmelder: LiCuSpace GmbH, 23966 Wismar (DE)
(72) Erfinder: Gutzmann, Helmut, 23974 Blowatz (DE)
(74) Vertreter: Heinemeyer, Karsten

(57) **Zusammenfassung**

Greifsystem (100) zum Sortieren einer Mehrzahl von Werkstücken (105), mit einem computergesteuerten Greifarm (110) und einer Steuereinheit (130). Der Greifarm ist ausgebildet, basierend auf einer optischen Erkennung des Werkstücks über mindestens zwei vorbestimmte Referenzaufnahmepunkte (112, 113) das Werkstück zu greifen, und mit dem gegriffenen Werkstück eine Mehrzahl von vorbestimmten Referenzbewegungen (118) auszuführen und während der Ausführung über eine in den Greifarm integrierte Greifsensorik (120) Rotationsdaten (122) aufzunehmen und auszugeben. Die Steuereinheit ist ausgebildet, Bewegungen des computergesteuerten Greifarms zu steuern, basierend auf den ausgegebenen Rotationsdaten eine Mehrzahl von Rotationsparametern (132) des Werkstücks zu bestimmen und darauf basierend dem Werkstück eine Rotationsklassifikation (134) zuzuordnen und basierend auf der Rotationsklassifikation eine Sortierung des gegriffenen Werkstücks zu steuern.

## Beschreibung

Die Erfindung betrifft ein Greifsystem zum Sortieren einer Mehrzahl von Werkstücken. Weiterhin betrifft die Erfindung eine Verwendung des Greifsystems bei der Fertigung einer Windkraftanlage. Schließlich betrifft die Erfindung ein Verfahren zum Sortieren einer Mehrzahl von Werkstücken, sowie ein Computerprogramm mit einem Programmcode zur Durchführung des erfindungsgemäßen Verfahrens.

Grundsätzlich sind Greifsysteme in verschiedenen Ausführungen bekannt. Insbesondere vor dem Hintergrund einer automatischen Fertigung von komplexen Erzeugnissen sind dabei unterschiedliche Greifstrukturen und Greifdynamiken bereits im Einsatz.

"Development of a measurement robot for identifying all inertia paramters of a rigid body in a single experiment" (H. Hahn et al., IEEE Trans. Contr. Syst. Technol., vol.9, no. 2, pp. 416-423, 2001) beschreibt den Aufbau und die Funktionsweise eines Laborversuchsstandes für einen Trägheitsmessroboter, der gleichzeitig die zehn Trägheitsparameter eines starren Körpers unter Verwendung der vollständigen nichtlinearen Modellgleichungen des Testkörpers ermitteln kann. Hierbei dient die Methode der Bestimmung der Parameter durch Führung des Bauteils durch eine geeignete Kinematik als Basis für die Entwicklung eines praktikablen Systems zur allgemeinen Untersuchung von Rotationsparametern eines Werkstückes.

Aufgabe der vorliegenden Erfindung ist es, ein verbessertes Greifsystem, insbesondere ein verbessertes Greifsystem zur automatisierten Untersuchung von Rotationsparametern eines Werkstückes, bereitzustellen.

Gemäß einem ersten Aspekt der Erfindung wird zur Lösung dieser Aufgabe ein Greifsystem zum Sortieren einer Mehrzahl von Werkstücken vorgeschlagen. Das Greifsystem umfasst einen computergesteuerten Greifarm und eine Steuereinheit.

Der computergesteuerte Greifarm zum Greifen eines Werkstücks ist angeordnet und ausgebildet, basierend auf einer optischen Erkennung des Werkstücks über mindestens zwei vorbestimmte Referenzaufnahmepunkte das Werkstück zu greifen, weiterhin ist der computergesteuerte Greifarm ausgebildet, mit einem gegriffenen Werkstück eine Mehrzahl von vorbestimmten Referenzbewegungen auszuführen und während einer Ausführung der Referenzbewegungen über eine in dem computergesteuerten Greifarm integrierte Greifsensorik Rotationsdaten aufzunehmen und auszugeben.

Die Steuereinheit ist ausgebildet, Bewegungen des computergesteuerten Greifarms zu steuern, basierend auf den ausgegebenen Rotationsdaten eine Mehrzahl von Rotationsparametern des Werkstücks zu bestimmen und basierend auf der Mehrzahl von Rotationsparametern dem Werkstück eine Rotationsklassifikation zuzuordnen, wobei die Steuereinheit weiter ausgebildet ist, basierend auf der Rotationsklassifikation eine Sortierung des gegriffenen Werkstücks innerhalb der Mehrzahl von Werkstücken auszulösen.

Im Rahmen der Erfindung wurde erkannt, dass es sich trotz immer präziser werdender Fertigungstechniken kaum vermeiden lässt, dass Werkstücke aus manchen Werkstoffen, wie etwa Kunststoffen, bei genauer Betrachtung unterschiedliche Messwerte für spezifische Rotationsparameter aufweisen. Hierdurch besteht in rotatorischen Anwendungen das Risiko von Resonanzerscheinungen und dadurch von erhöhter Materialbelastung. Es wurde weiter erkannt, dass sich dieses Problem dadurch lösen lässt, dass man Werkstücke mit ähnlichen Messwerten für die Rotationsparameter zusammenbringt und dadurch eine gleichmäßige Rotation mit wenigen oder gar keinen Resonanzerscheinungen ermöglicht.

Vorteilhaft erlaubt das erfindungsgemäße Greifsystem eine Klassifizierung der Werkstücke aus der Mehrzahl von Werkstücken basierend auf den bestimmten Rotationsparametern dieser Werkstücke.

Weiterhin erlaubt das erfindungsgemäße Greifsystem eine automatisierte Sortierung von Werkstücken, basierend auf reproduzierbaren dynamischen Eigenschaften dieser Werkstücke. So können Eigenschaften, die selbst bei einer optischen Analyse eines Werkstückes nicht zweifelsfrei bestimmbar sind, für die Weiterverarbeitung dieser Werkstücke berücksichtigt werden.

Unter dem Bestimmen der Rotationsparameter ist im Sinne der Erfindung eine Bestimmung eines konkreten Messwertes für einen Rotationsparameter zu verstehen.

Nachfolgend werden bevorzugte Ausführungsformen des erfindungsgemäßen Greifsystems beschrieben.

In einer besonders bevorzugten Ausführungsform umfasst die Mehrzahl von Rotationsparametern eine Mehrzahl von Massenträgheitsmomenten, insbesondere axialen Massenträgheitsmomenten, des jeweils gegriffenen Werkstücks. Die Rotationsparameter gemäß dieser Ausführungsform lassen sich besonders zuverlässig aus vorbestimmten Referenzbewegungen bestimmen. Eine detaillierte Beschreibung, wie solch eine Bestimmung der Massenträgheitsmomente ausgeführt werden kann, befindet sich in dem bereits zitierten Dokument "Development of a measurement robot for identifying all inertia paramters of a rigid body in a single experiment" (H. Hahn et al., IEEE Trans. Contr. Syst. Technol., vol.9, no. 2, pp. 416-423, 2001).

In einer besonders bevorzugten Ausführungsform sind die Zuordnung der Rotationsparameter, die vorbestimmten Referenzaufnahmepunkte und/oder die vorbestimmten Referenzbewegungen in einem Speichermodul der Steuereinheit hinterlegt. Ein solches Speichermodul ermöglicht vorteilhaft die Hinterlegung verschiedener vorbestimmter Größen für verschiedene Werkstoffe, insbesondere für verschiedene Werkstoffformen.

In einer weiteren vorteilhaften Ausführungsform umfasst das Auslösen der Sortierung eine Steuerung des computergesteuerten Greifarms derart, dass der computergesteuerte Greifarm das gegriffene Werkstück an einer der Rotationsklassifikation zugeordneten Position in einer Umgebung des computergesteuerten Greifarms ablegt. In dieser Ausführungsform wird durch das Vorsehen der zugeordneten Position sichergestellt, dass die zugeordnete Rotationsklassifikation nicht nur eine interne Größe des Greifsystems darstellt, sondern auch zu einer von außen erkennbaren Unterscheidung zwischen den Werkstücken durch verschiedene zugeordnete Positionen führt. Hierdurch können auch andere weiterverarbeitende Vorrichtungen anhand der zugeordneten Position auf die Rotationsklassifikation oder eine daraus ableitbare Größe schließen.

In einer bevorzugten Variante der vorhergehenden Ausführungsform weist das Greifsystem weiterhin ein Ablagepalettensystem auf, wobei die zugeordnete Position in der Umgebung des computergesteuerten Greifarms mindestens eine Palette innerhalb des Ablagepalettensystems indiziert. In dieser Variante kann auch für eine manuelle Weiterverarbeitung deutlich anhand der zugeordneten Palette auf die Rotationsklassifikation oder eine daraus ableitbare Größe geschlossen werden. Die Paletten können auch gekennzeichnet sein, so dass die entsprechende Zuordnung des Werkstücks zu einer Kennzeichnung optisch erkennbar ist. Zudem können derartige Paletten eine gemeinsame Verarbeitung von in einer jeweiligen Palette befindlichen Werkstücken vereinfachen. So kann die unmittelbare räumliche Nähe und der vorzugsweise abgetrennte Zuordnungsraum auf der Palette Fehler bei der Zuordnung zur Weiterverarbeitung reduzieren. Unter einem Ablagepalettensystem ist eine Anordnung von Ablageebenen oder Ablagewannen zu verstehen, die in diesem Sinne Paletten zur Ablage eines Werkstücks bereitstellen.

In einer bevorzugten Ausführungsform umfasst das Auslösen der Sortierung eine Kennzeichnung des entsprechenden Werkstücks mit einer digitalen Signatur, insbesondere einer eindeutigen digitalen Signatur. In dieser Ausführungsform erlaubt die digitale Signatur ein automatisches Auslesen der vorgenommenen Sortierung. Eine eindeutige digitale Signatur liegt vor, wenn jedem Werkstück nur genau eine digitale Signatur zugeordnet wird. Besonders bevorzugt wird eine jeweilige digitale Signatur auch nur einmal für die Mehrzahl von Werkstücken verwendet. Eine digitale Signatur kann eine Kennzeichnung über eine gedruckte oder aufgeklebte Fläche sein, die eine digital auswertbare Information indiziert. Hierdurch kann auch nach einer Fertigstellung des durch das Werkstück zu bildenden Erzeugnisses das Ergebnis der erfindungsgemäßen Sortierung weiter nachvollziehbar sein. Zudem kann im Rahmen verschiedener Verarbeitungsschritte, wie beispielsweise im Rahmen einer Qualitätskontrolle, eine Auswertung der zugeordneten digitalen Signaturen der Werkstücke erfolgen.

In einer weiteren Ausführungsform ist die Steuereinheit weiter ausgebildet, basierend auf Daten eines optischen Sensors des Greifsystems eine synchrone Abfolge der vorbestimmten Referenzbewegungen durch den computergesteuerten Greifarm zu prüfen und bei der Bestimmung der Mehrzahl von Rotationsparametern des Werkstücks zu berücksichtigen. In dieser Ausführungsform wird besonders zuverlässig die erfindungsgemäße Abfolge der vorbestimmten Referenzbewegungen geprüft, sodass eine besonders zuverlässige Zuordnung der Rotationsklassifikation möglich ist. Bei den optischen Sensoren kann es sich beispielsweise um eine Kamera, einen Fotodetektor, einen CCD-Sensor oder dergleichen handeln. Die Auswertung von Bewegungen basierend auf optischen Daten ist allgemein bekannt, so dass hierauf im Folgenden nicht detailliert eingegangen wird.

In einer besonders bevorzugten Ausführungsform umfasst die in den computergesteuerten Greifarm integrierte Greifsensorik eine Kraft-Moment-Sensorik. In dieser Ausführungsform wird vorteilhaft auf die in der Industrierobotik etablierter Kraft-Moment-Sensorik zurückgegriffen, so dass am Markt bereits befindliche Bauteile für das erfindungsgemäße Greifsystem verwendet werden können. Dabei wird diese Technik typischerweise eingesetzt, um Kontaktkraftprobleme durch eine hybride Kraft-Lageregelung zu lösen. Diese Technik bietet jedoch auch die Möglichkeit, die durch die Tätigkeit der Nutzlast hervorgerufenen Drehmomente und Kräfte während einer Referenzbewegungen zu messen, was durch das erfindungsgemäße Greifsystem ausgenutzt wird. Eine serielle Kinematik hat weiter den Vorteil, dass die an dem Greifarm angebrachte Last als einzige Randbedingung die Nennlast des computergesteuerten Greifarms nicht überschreiten darf. Die geometrischen Parameter sind hingegen fast beliebig skalierbar. Weiter hat die Lösung den Vorteil, dass sie sich bei entsprechender Auslegung auf das durch die gesamte Robotik aufgespannte Nennlastspektrum von 5 kg bis zu 4000 kg anwenden lässt.

In einer bevorzugten Ausführungsform wird der computergesteuerte Greifarm durch einen vertikalen sechsachsigen Knickarmroboter gebildet. Ein solcher Greifarm kann vorteilhaft kombiniert werden mit einer 6D Kraft-Moment-Sensorik um zu dem erfindungsgemäßen Greifsystem zu führen. Aus anderen technischen Bereichen ist eine solche konkrete Umsetzung des Knickarmroboters bekannt, so dass auf Details seines Aufbaus im Folgenden nicht genauer eingegangen wird.

Gemäß einem zweiten Aspekt der Erfindung wird zur Lösung der oben genannten Aufgabe eine Verwendung des Greifsystems gemäß dem ersten Aspekt der Erfindung bei der Fertigung einer Windkraftanlage, insbesondere bei der Fertigung einer Gondel und/oder eines Rotors einer Windkraftanlage vorgeschlagen.

Die Verwendung gemäß dem zweiten Aspekt der Erfindung ist dadurch besonders vorteilhaft, dass die erfindungsgemäße Sortierung der Mehrzahl von Werkstücken basierend auf Rotationsparametern dazu führt, dass Werkstücke, insbesondere identische Werkstücke, mit vergleichbaren Rotationsparametern zusammensortiert werden können. So können beispielsweise einzelne Rotorblätter einer Windkraftanlage bei der Fertigung so zusammensortierte werden, dass für die Windkraftanlage nur solche Rotorblätter aus einer Vielzahl von Rotorblättern verwendet werden, die im Wesentlichen identische Rotationsparameter aufweisen. Insbesondere der Einsatz von Glasfaserkunststoffstrukturen (GfK) und/oder Carbonfaserverstärkten Kunststoffstrukturen (CFK) kann zu erhöhten Inhomogenitäten in der Massenverteilung einzelner Bauteile führen. So kann beispielsweise eine ungünstige Kombination von Rotorblättern zu ungewollten Schwingungen der Windkraftanlage führen. Der gleiche Sachverhalt gilt für Bauteile einer drehbar gelagerten Gondel, welche aufgrund von Symmetrieeigenschaften der Gondel ebenfalls bei ungünstiger Kombination von Bauteilen zu ungewollten Schwingungen der Windkraftanlage führen können. In diesem Sinne führt das erfindungsgemäße Greifsystem vorteilhaft zu einem automatisierten Auswuchten von Komponenten der Windkraftanlage.

Besonders vorteilhaft ist das erfindungsgemäße Greifsystem bei der Fertigung kleiner, privat nutzbarer Windkraftanlagen. Derartige kleine Windkraftanlagen können vorteilhaft industriell und automatisiert gefertigt werden. Für solch eine automatisierte Fertigung ermöglicht die erfindungsgemäße Verwendung des Greifsystems gemäß dem zweiten Aspekt der Erfindung eine abgestimmte Auswahl gleichartiger Werkstücke basierend auf den während der vorbestimmten Referenzbewegungen ermittelten Rotationsparametern dieser Werkstücke.

Gemäß einem dritten Aspekt der Erfindung wird zur Lösung der oben genannten Aufgabe ein Verfahren zum Sortieren einer Mehrzahl von Werkstücken vorgeschlagen. Das erfindungsgemäße Verfahren weist dabei die folgenden Schritte auf:
- Bereitstellen eines computergesteuerten Greifarms zum Greifen eines Werkstücks und einer damit signaltechnisch verbundenen Steuereinheit zum Steuern des computergesteuerten Greifarms;
- Greifen des Werkstücks über mindestens zwei vorbestimmte Referenzaufnahmepunkte basierend auf einer optischen Erkennung des Werkstücks;
- Ausführen einer Mehrzahl von vorbestimmten Referenzbewegungen;
- Aufnehmen und Ausgeben von Rotationsdaten über eine in dem computergesteuerten Greifarm integrierte Greifsensorik während einer Ausführung der Referenzbewegungen;
- Bestimmen einer Mehrzahl von Rotationsparametern des Werkstücks basierend auf den ausgegebenen Rotationsdaten;
- Zuordnen einer Rotationsklassifikation zu dem Werkstück basierend auf der Mehrzahl von Rotationsparametern; und
- Auslösen einer Sortierung des gegriffenen Werkstücks basierend auf der Rotationsklassifikation.

Das erfindungsgemäße Verfahren gemäß dem dritten Aspekt der Erfindung wird von dem Greifsystem gemäß dem ersten Aspekt der Erfindung ausgeführt und umfasst somit auch dessen Vorteile. Insbesondere erlaubt das erfindungsgemäße Verfahren eine Klassifikation der Mehrzahl von Werkstücken basierend auf automatisiert bestimmten Messwerten von Rotationsparametern dieser Werkstücke.

Die Verfahrensschritte des erfindungsgemäßen Verfahrens werden vorzugsweise in der angegebenen Reihenfolge ausgeführt. Insbesondere muss das Greifen des Werkstücks, das Ausführen der Referenzbewegungen, das Aufnehmen der Rotationsdaten und das Bestimmen der Mehrzahl von Rotationsparametern in dieser Reihenfolge stattfinden.

Besonders bevorzugt wird das erfindungsgemäße Verfahren für eine Mehrzahl von gleichartigen Werkstücken ausgeführt. Wenn die gleichartigen Werkstücke sich optisch kaum unterscheiden, stellt die Sortierung basierend auf den bestimmten Messwerten von Rotationsparametern einen Vorteil gegenüber einer weniger qualifizierten manuellen Sortierung im Rahmen eines Produktionsprozesses dar.

In einer bevorzugten Ausführungsform des erfindungsgemäßen Verfahrens umfasst das Auslösen der Sortierung ein Ablegen des gegriffenen Werkstücks an einer der Rotationsklassifikation zugeordneten Position in einer Umgebung des computergesteuerten Greifarms. Durch das Ablegen an der zugeordneten Position wird von außen die vorgenommene Sortierung erkennbar, beispielsweise für eine manuelle Weiterverarbeitung und/oder für eine maschinelle Weiterverarbeitung.

In einer weiteren vorteilhaften Ausführungsform des erfindungsgemäßen Verfahrens werden für einen weiteren Fertigungsprozess stets zusammensortierte Werkstücke aus der Mehrzahl von Werkstücken, insbesondere Werkstücke mit einer im Wesentlichen gleichen Rotationsklassifikation, gemeinsam für eine Fertigung eines aus den zusammensortierten Werkstücken zumindest teilweise gebildeten Erzeugnisses verwendet. In dieser Ausführungsform wird das abschließend gebildete Erzeugnis aus Werkstücken gebildet, die zumindest eine im Wesentlichen gleiche Rotationsklassifikation aufweisen. Das ist beispielsweise vorteilhaft, wenn die Werkstücke eine zusammengesetzte und sich bewegende Komponente des Erzeugnisses bilden, wie dies beispielsweise bei einer Kombination von Rotorblättern für eine Windkraftanlage der Fall ist.

Gemäß einem vierten Aspekt der Erfindung wird zur Lösung der oben genannten Aufgabe ein Computerprogramm mit einem Programmcode zur Durchführung eines Verfahrens gemäß dem dritten Aspekt der Erfindung vorgeschlagen. Dabei wird der Programmcode auf einem Computer, einem Prozessor oder einer programmierbaren Hardwarekomponente ausgeführt. Vorzugsweise werden mehrere Schritte des erfindungsgemäßen Verfahrens durch einen gemeinsamen Computer, einen gemeinsamen Prozessor oder eine gemeinsame programmierbare Hardwarekomponente ausgeführt. Vorzugsweise sind die einzelnen Schritte dabei zumindest auf Software-Ebene voneinander durch entsprechende Softwareblöcke getrennt. Besonders bevorzugt ist das Bestimmen der Mehrzahl von Rotationsparametern und das Zuordnen der entsprechenden Rotationsklassifikation gemäß dem erfindungsgemäßen Verfahren auf einem gemeinsamen Computer, einem gemeinsamen Prozessor oder einer gemeinsamen programmierbaren Hardwarekomponente ausgeführt.

Die Erfindung soll nun anhand von in den Figuren schematisch dargestellten, vorteilhaften Ausführungsbeispielen näher erläutert werden. Von diesen zeigen im Einzelnen:
- Fig. 1: eine schematische Darstellung eines ersten Ausführungsbeispiels eines Greifsystems gemäß einem ersten Aspekt der Erfindung;
- Fig. 2: eine schematische Darstellung eines zweiten Ausführungsbeispiels des Greifsystems gemäß dem ersten Aspekt der Erfindung;
- Fig. 3: eine schematische Darstellung eines dritten Ausführungsbeispiels des Greifsystems gemäß dem ersten Aspekt der Erfindung im Rahmen einer Verwendung dieses Greifsystems bei der Fertigung einer Windkraftanlage gemäß einem zweiten Aspekt der Erfindung; und
- Fig. 4: ein Flussdiagramm eines Ausführungsbeispiels eines Verfahrens gemäß einem dritten Aspekt der Erfindung.

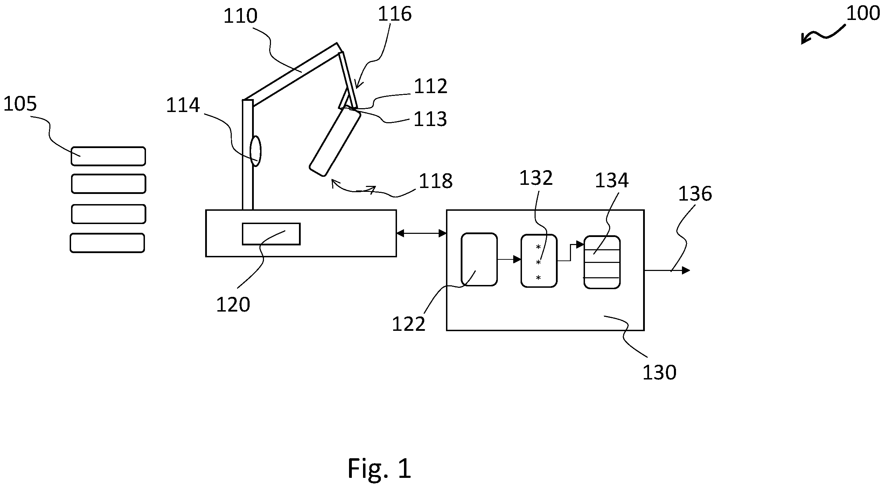

Fig. 1 zeigt eine schematische Darstellung eines ersten Ausführungsbeispiels eines Greifsystems 100 gemäß einem ersten Aspekt der Erfindung.

Das Greifsystem 100 ist zum Sortieren einer Mehrzahl von Werkstücken 105 ausgebildet. Hierfür hat das Greifsystem 100 einen computergesteuerten Greifarm 110 und eine Steuereinheit 130.

Der computergesteuerte Greifarm 110 ist zum Greifen eines Werkstücks 105 ausgebildet. Hierfür kann der computergesteuerte Greifarm 110 basierend auf einer optischen Erkennung des Werkstücks 105 über mindestens zwei vorbestimmte Referenzaufnahmepunkte 112, 113 das Werkstück 105 greifen. Die optische Erkennung basiert in dem dargestellten Ausführungsbeispiel auf einem an den computergesteuerten Greifarm 110 angeordneten Kameramodul 114. Über das Kameramodul 114 werden hinterlegte Referenzaufnahmepunkte 112, 113 automatisiert durch den computergesteuerten Greifarm 110 und/oder die mit dem computergesteuerten Greifarm 110 verbundene Steuereinheit 130 erkannt und von einem Greifabschnitt 116 gezielt gegriffenen. Das Greifen kann dabei durch ein Führen von Gelenken des Greifabschnitts 116 gegeneinander erfolgen und/oder über mindestens ein Saugmodul am Greifabschnitt 116, über welches ein Unterdruck und damit auch eine zuverlässige Verbindung mit dem Greifabschnitt 116 hergestellt wird. Weiterhin ist der computergesteuerte Greifarm 110 ausgebildet, mit einem gegriffenen Werkstück eine Mehrzahl von vorbestimmten Referenzbewegungen 118 auszuführen und während einer Ausführung der Referenzbewegungen 118 über eine in dem computergesteuerten Greifarm 110 integrierte Greifsensorik 120 Rotationsdaten 122 aufzunehmen und auszugeben. Die Rotationsdaten 122 sind dabei Daten, die über einen jeweiligen Sensor der Greifsensorik 120 aufgenommen wurden und die eine aufgenommene Charakteristik des gegriffenen Werkstücks 105 während mindestens eines Teils der vorbestimmten Referenzbewegungen 118 betreffen. Die Greifsensorik 120 kann alternativ zu dem dargestellten Ausführungsbeispiel, in dem sie in einem Unterbaubereich des Greifarms angeordnet ist, im Bereich des Greifabschnittes 116 und/oder in der Steuereinheit 130 angeordnet sein.

Die Steuereinheit 130 ist ausgebildet, Bewegungen des computergesteuerten Greifarms 110 zu steuern, basierend auf den ausgegebenen Rotationsdaten 122 eine Mehrzahl von Rotationsparametern 132 des Werkstücks 105 zu bestimmen und basierend auf der Mehrzahl von Rotationsparametern 132 dem Werkstück 105 eine Rotationsklassifikation 134 zuzuordnen. Die Mehrzahl von Rotationsparametern 132 umfasst in dem dargestellten Ausführungsbeispiel beispielhaft eine Mehrzahl von Massenträgheitsmomenten, insbesondere axialen Massenträgheitsmomenten, des jeweils gegriffenen Werkstücks 105. Alternativ oder ergänzend können andere die Rotation betreffende Parameter als Rotationsparametern bestimmt werden, wie beispielsweise eine Periodendauer, ein Drehmoment, eine Fliehkraft und/oder dergleichen. Vorzugsweise bilden die ausgegebenen Rotationsdaten 122 Rohdaten der aufgenommenen vorbestimmten Referenzbewegungen 118, welche in einfachen weiterverarbeitbare Rotationsparameter 132 umgerechnet werden müssen. Zudem kann basierend auf den erfassten Rotationsdaten ein Schwerpunkt des gegriffenen Werkstücks ermittelt werden.

Die Rotationsklassifikation 134 stellt eine Zusammenfassung eines jeweiligen Rotationsparameterbereichs dar. Solch ein Rotationsparameterbereich kann einen jeweiligen Rotationsparameter 132 und/oder eine Gruppe von Rotationsparametern 132 betreffen. So haben erfindungsgemäß Werkstücke 105, die sich zumindest in ihrer Charakteristik betreffend einem Rotationsparameter 132 ähneln oder identisch sind, eine im Wesentlichen gleiche Rotationsklassifikation 134. Die Rotationsklassifikation umfasst in einer Variante dieses Ausführungsbeispiels mehrere Unterklassifikationen, so dass die Rotationsklassifikation zwischen sich ähnelnden Werkstücken sich auch teilweise unterscheiden kann.

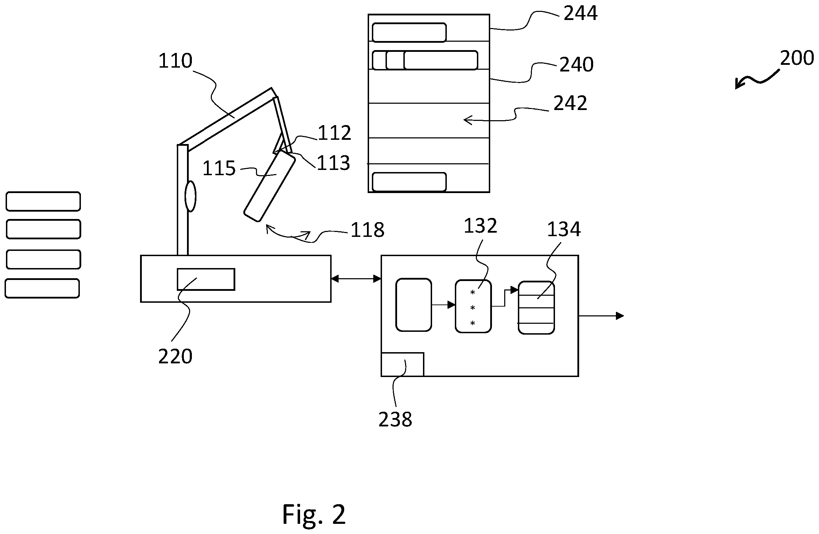

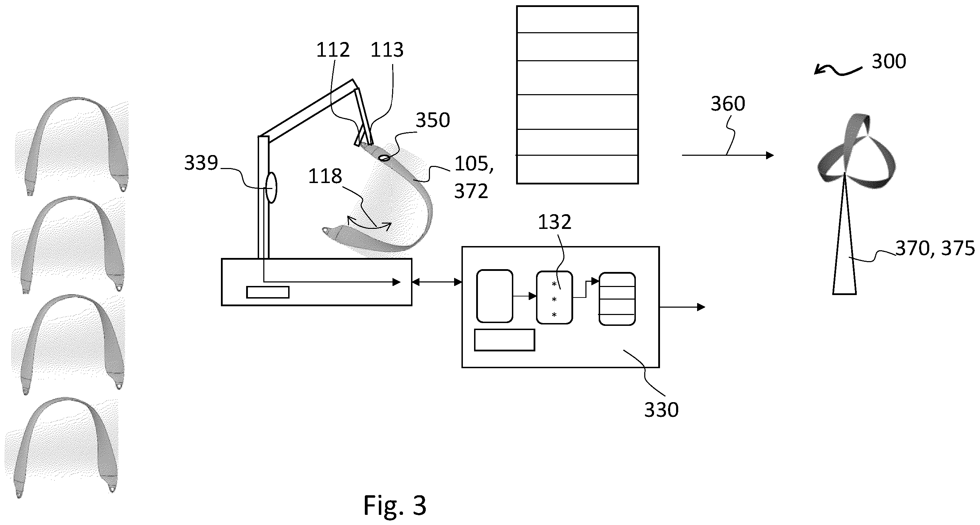

Schließlich ist die Steuereinheit 130 weiter ausgebildet ist, basierend auf der Rotationsklassifikation 134 eine Sortierung des gegriffenen Werkstücks 105 innerhalb der Mehrzahl von Werkstücken 105 auszulösen. In dem dargestellten Ausführungsbeispiel wird die Sortierung durch ein Sortierungssignal 136 ausgelöst. Das Sortierungssignal 136 indiziert eine auszuführende Sortierung für einen Anwender des Greifsystems 100 und/oder für eine automatisiert sortierende Komponente des Greifsystems 100 oder eines weiterführenden Verarbeitungssystems. Die in Fig. 2 und Fig. 3 dargestellten Ausführungsbeispiel zeigen eine Sortierung durch den computergesteuerten Greifarm des Greifsystems. Eine erfindungsgemäße Umsetzung des Greifsystems kann jedoch auch eine Ausgabe des Sortiersignals durch die Steuereinheit an ein externes Gerät und/oder an einen Anwender des Greifsystems zum Zwecke einer auszuführenden Sortierung umfassen.

Fig. 2 zeigt eine schematische Darstellung eines zweiten Ausführungsbeispiels des Greifsystems 200 gemäß dem ersten Aspekt der Erfindung.

Das Greifsystem 200 unterscheidet sich von dem in Fig. 1 dargestellten Greifsystem 100 zumindest dadurch, dass die Steuereinheit 230 ein Speichermodul 238 aufweist, auf welchem die Zuordnung der Rotationsparameter 132, die vorbestimmten Referenzaufnahmepunkte 112, 113 und/oder die vorbestimmten Referenzbewegungen 118 hinterlegt sind. Vorzugsweise können auf dem Speichermodul 238 hinterlegte Daten durch eine Nutzereingabe einer in Fig. 2 nicht dargestellten Benutzerschnittstelle verändert, ergänzt oder gelöscht werden.

Weiterhin wird der computergesteuerte Greifarm 110 in dem dargestellten Ausführungsbeispiel derart gesteuert, dass das Auslösen der Sortierung eine Steuerung des computergesteuerten Greifarms 110 derart umfasst, dass der computergesteuerte Greifarm 110 das gegriffene Werkstück 105 an einer der Rotationsklassifikation 134 zugeordneten Position 242 in einer Umgebung des computergesteuerten Greifarms 110 ablegt. Die zugeordnete Position 242 indiziert dabei mindestens eine Palette 244 innerhalb eines Ablagepalettensystems 240 des Greifsystems 200. Der computergesteuerte Greifarm 110 ist vorliegend ausgebildet, das gegriffene Werkstück 105 zum Auslösen der Sortierung in die zugeordnete Position 242 innerhalb des Ablagepalettensystems 240 zu legen. Das Ablagepalettensystem 240 kann dabei ein Regalsystem, eine Anordnung von Paletten, eine Anordnung von Wannen, ein Containersystem oder dergleichen sein. In einem nicht dargestellten Ausführungsbeispiel weist das Greifsystem zusätzlich eine Sortiereinheit auf, die dazu ausgebildet ist, das zu sortierende Werkstück in die über die Rotationsklassifikation zugeordnete Position zu bringen.

Das Greifsystem 200 setzt die erfindungsgemäße Bestimmung der Rotationsparameter 132 über eine Greifsensorik 220 um, die eine Kraft-Moment-Sensorik umfasst. Besonders bevorzugt wird der computergesteuerte Greifarm 110 des Greifsystems 100 über einen vertikalen sechsachsigen Knickarmroboter in Kombination mit einem 6D Kraft Momenten Sensor umgesetzt. Eine derartige Technologie ist in der Industrierobotik etabliert, so dass auf Details hierzu nicht weiter eingegangen wird. Einer fachkundigen Person ist jedoch klar, dass die in den Figuren 1, 2 und 3 dargestellten Greifarme lediglich idealisierte Greifarme sind, von denen sich ein erfindungsgemäßer computergesteuerter Greifarm deutlich unterscheiden kann. Insbesondere kann der computergesteuerte Greifarm ohne sich bewegende fingerähnliche Schenkel das Werkstück greifen. Beispielsweise kann ein Werkstück an dem vorbestimmten Referenzaufnahmepunkte über einen Unterdruck, einen Bereich erhöhter Reibung oder dergleichen an dem Greifarm befestigt sein. So ist beispielsweise ein formschlüssiges Konzept zum Greifen des Werkstücks möglich. Das bevorzugte kraftschlüssigen Konzept zum Greifen des Werkstücks ist erfindungsgemäß darauf ausgelegt, den Druck auf die vorbestimmten Referenzaufnahmepunkte so gering zu halten, dass eine Beschädigung des Werkstücks unwahrscheinlich ist.

Fig. 3 zeigt eine schematische Darstellung eines dritten Ausführungsbeispiels des Greifsystems 300 gemäß dem ersten Aspekt der Erfindung im Rahmen einer Verwendung dieses Greifsystems 300 bei der Fertigung einer Windkraftanlage 375 gemäß einem zweiten Aspekt der Erfindung.

Das Greifsystem 300 unterscheidet sich von dem in Fig. 1 dargestellten Greifsystem 200 dadurch, dass das Greifsystem 300 mit dem erfindungsgemäßen Auslösen der Sortierung eine Kennzeichnung des entsprechenden Werkstücks mit einer digitalen Signatur 350, insbesondere einer eindeutigen digitalen Signatur, vornimmt. Die digitale Signatur wird dabei aufgesprüht, um den Sortiervorgang später am jeweiligen Werkstück 105 nachvollziehbar zu machen. Alternativ kann auch eine Klebung oder dergleichen zum Anbringen der digitalen Signatur erfolgen. Anhand der digitalen Signatur kann auch eine Weiterverarbeitung 360 zu dem abschließenden zusammengesetzten Erzeugnis 370 besonders zuverlässig erfolgen.

In dem dargestellten Ausführungsbeispiel wird als zusammengesetztes Erzeugnis 370 eine Windkraftanlage 375 gebaut. Für diese werden einzelne Rotorblätter 372 entsprechend Ihrer Rotationseigenschaften klassifiziert, so dass vorzugsweise nur Rotorblätter 372 mit ähnlichen Rotationseigenschaften zu einer gemeinsamen Windenergieanlage 375 zusammengesetzt werden. Hierdurch wird eine durch asymmetrische Bauteile mögliche Schwingung der Windkraftanlage 375 vermieden.

Neben der in Fig. 3 dargestellten Verwendung für Rotorblätter als jeweilige Werkstücke, können auch Komponenten der Gondel der Windkraftanlage 375 durch das erfindungsgemäße Greifsystem in ihren Rotationseigenschaften verglichen und entsprechend klassifiziert werden.

Grundsätzlich ist das erfindungsgemäße Greifsystem besonders vorteilhaft für Anwendungen im Leichtbau, weil dort meist Glasfaserkunststoffstrukturen (GfK) und/oder Carbonfaserverstärkte Kunststoffstrukturen (CFK) im Einsatz sind, welche grundsätzlich auch von außen kaum zu erkennende Inhomogenitäten in der Massenverteilung aufweisen können. Für derartige Strukturen erlaubt das erfindungsgemäße Greifsystem ein automatisches Abstimmen und Auswuchten von Werkstücken für ein entsprechend zusammengesetztes Erzeugnis.

Schließlich weist das Greifsystem 300 aus Fig. 3 noch die Besonderheit auf, dass die Steuereinheit 330 weiter ausgebildet ist, basierend auf Daten eines optischen Sensors 339 des Greifsystems 300 eine synchrone Abfolge der vorbestimmten Referenzbewegungen 118 durch den computergesteuerten Greifarm 110 zu prüfen und bei der Bestimmung der Mehrzahl von Rotationsparametern 132 des Werkstücks 105, 372 zu berücksichtigen. Der optische Sensor 339 wird dabei vorliegend im Wesentlichen durch das Kameramodul 114 gebildet, welches bereits zum Visualisieren der Referenzaufnahmepunkte 112, 113 verwendet wurde. Zusätzlich zum vorbestimmten Greifen an den Referenzaufnahmepunkten 112, 113 kann somit die Referenzbewegung 118 überwacht werden. Alternativ oder ergänzend kann ein zusätzlicher optischer Sensor in dem erfindungsgemäßen Greifsystem vorgesehen sein, um die räumliche Erstreckung der Referenzbewegung 118 besonders zuverlässig detektieren und dadurch auch prüfen zu können.

Die Komponenten des erfindungsgemäßen Greifsystems können zumindest teilweise in einem gemeinsamen Gehäuse und/oder in unmittelbarer räumlicher Nähe zueinander vorgesehen sein. Alternativ oder ergänzend kann auch ein Teil des Greifsystems, wie etwa die Steuereinheit, beabstandet zu den weiteren Komponenten des Greifsystems angeordnet sein.

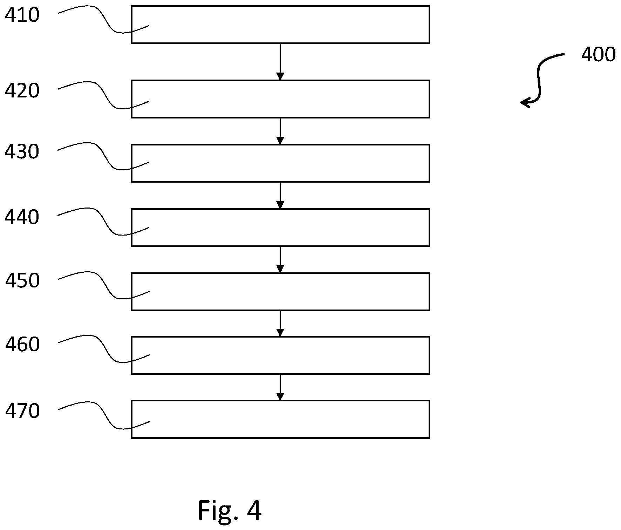

Fig. 4 zeigt ein Flussdiagramm eines Ausführungsbeispiels eines Verfahrens 400 gemäß einem dritten Aspekt der Erfindung.

Das erfindungsgemäße Verfahren 400 ist zum Sortieren einer Mehrzahl von Werkstücken ausgebildet. Hierfür weist das Verfahren die im Folgenden beschriebenen Schritte auf.

Ein erster Schritt 410 umfasst ein Bereitstellen eines computergesteuerten Greifarms zum Greifen eines Werkstücks und einer damit signaltechnisch verbundenen Steuereinheit zum Steuern des computergesteuerten Greifarms.

Ein nächster Schritt 420 umfasst ein Greifen des Werkstücks über mindestens zwei vorbestimmte Referenzaufnahmepunkte basierend auf einer optischen Erkennung des Werkstücks.

Ein darauffolgender Schritt 430 umfasst ein Ausführen einer Mehrzahl von vorbestimmten Referenzbewegungen.

Ein weiterer Schritt 440 umfasst ein Aufnehmen und Ausgeben von Rotationsdaten über eine in dem computergesteuerten Greifarm integrierte Greifsensorik während einer Ausführung der Referenzbewegungen.

Ein nächster Schritt 450 umfasst ein Bestimmen einer Mehrzahl von Rotationsparametern des Werkstücks basierend auf den ausgegebenen Rotationsdaten.

Ein daran anschließender Schritt 460 umfasst ein Zuordnen einer Rotationsklassifikation zu dem Werkstück basierend auf der Mehrzahl von Rotationsparametern.

Ein abschließender Schritt 470 umfasst ein Auslösen einer Sortierung des gegriffenen Werkstücks basierend auf der Rotationsklassifikation.

Die Verfahrensschritte werden vorzugsweise in der angegebenen Reihenfolge ausgeführt. Der erste Schritt 410 des Bereitstellens des computergesteuerten Greifarms und der Steuereinheit, ist vorzugsweise den weiteren Verfahrensschritten vorgelagert. Die weiteren Verfahrensschritte werden vorzugsweise für ein jeweiliges Werkstück erneut in der angegebenen Reihenfolge ausgeführt, während der erste Schritt 410 vorzugsweise einmalig, wie beispielsweise bei einer Montage einer Produktionsanlage, ausgeführt wird.

Die Schritte 420 bis 470 werden vorzugsweise für ein jeweiliges Werkstück aus der Mehrzahl von Werkstücken innerhalb von weniger als 90 Sekunden, insbesondere weniger als 60 Sekunden, besonders bevorzugt weniger als 30 Sekunden, ausgeführt.

Das Auslösen der Sortierung gemäß Schritt 470 kann ein von außen erkennbares Sortieren im Rahmen einer besonderen Positionierung des gegriffenen Werkstückes sein. Alternativ oder ergänzend kann das Auslösen der Sortierung eine im Greifsystem, wie etwa in einem Speichermodul, hinterlegte Sortierung sein, die von außen, beispielsweise für eine manuelle Sortierung, über eine Nutzerschnittstelle einsehbar ist.

In einem besonders bevorzugten Ausführungsbeispiel umfasst das Auslösen der Sortierung ein Ablegen des gegriffenen Werkstücks an einer der Rotationsklassifikation zugeordneten Position in einer Umgebung des computergesteuerten Greifarms. In diesem Ausführungsbeispiel kann von außen, beispielsweise durch einen Nutzer oder durch eine weitere Verarbeitungseinheit, die Rotationsklassifikation anhand der zugeordneten Position qualitativ erfasst werden. Die zugeordnete Position kann beispielsweise eine Palette in einem Ablagepalettensystem sein.

In einer besonders bevorzugten Variante des Verfahrens 400 werden für einen weiteren Fertigungsprozess stets zusammensortierte Werkstücke aus der Mehrzahl von Werkstücken, insbesondere Werkstücke mit einer im Wesentlichen gleichen Rotationsklassifikation, gemeinsam für eine Fertigung eines aus den zusammensortierten Werkstücken zumindest teilweise gebildeten Erzeugnisses verwendet. Beispielsweise können die Werkstücke mit im Wesentlichen gleicher Rotationsklassifikation an einem gemeinsamen Ort des zusammengesetzten Erzeugnisses eingesetzt werden, wie dies im Rahmen von Fig. 3 für Windkraftanlagen beschrieben ist. Andere Einsatzgebiete sind für das erfindungsgemäße Verfahren offenkundig auch möglich. Besonders vorteilhaft ist das Verfahren 400 bei der Fertigung von Erzeugnissen bei denen die Werkstücke im Anwendungsfall zumindest temporär einer Rotation ausgesetzt sind.

### Bezugszeichenliste

- 100, 200, 300: Greifsystem
- 105: Werkstück
- 110: computergesteuertes Greifsystem
- 112, 113: vorbestimmter Referenzaufnahmepunkt
- 114: Kameramodul
- 116: Greifabschnitt
- 118: vorbestimmte Referenzbewegung
- 120, 220: Sensorik
- 122: Rotationsdaten
- 130, 330: Steuereinheit
- 132: Rotationsparameter
- 134: Rotationsklassifikation
- 136: Sortiersignal
- 238: Speichermodul
- 240: Ablagepalettensystem
- 242: zugeordnete Position
- 244: Palette
- 339: optischer Sensor
- 350: digitale Signatur
- 360: Weiterverarbeitung
- 370: zusammengesetztes Erzeugnis
- 372: Rotorblatt
- 375: Windkraftanlage
- 400: Verfahren
- 410, 420, 430, 440, 450, 460, 470: Verfahrensschritte

## Patentansprüche

1. Greifsystem (100) zum Sortieren einer Mehrzahl von Werkstücken (105), mit
- einem computergesteuerte Greifarm (110) zum Greifen eines Werkstücks (105), welcher angeordnet und ausgebildet ist, basierend auf einer optischen Erkennung des Werkstücks (105) über mindestens zwei vorbestimmte Referenzaufnahmepunkte (112, 113) das Werkstück (105) zu greifen, weiterhin ist der computergesteuerte Greifarm (110) ausgebildet, mit einem gegriffenen Werkstück (105) eine Mehrzahl von vorbestimmten Referenzbewegungen (118) auszuführen und während einer Ausführung der Referenzbewegungen (118) über eine in dem computergesteuerten Greifarm (110) integrierte Greifsensorik (120) Rotationsdaten (122) aufzunehmen und auszugeben,
- einer Steuereinheit (130), welche ausgebildet ist, Bewegungen des computergesteuerten Greifarms (110) zu steuern, basierend auf den ausgegebenen Rotationsdaten (122) eine Mehrzahl von Rotationsparametern (132) des Werkstücks (105) zu bestimmen und basierend auf der Mehrzahl von Rotationsparametern (132) dem Werkstück (105) eine Rotationsklassifikation (134) zuzuordnen,
wobei die Steuereinheit (130) weiter ausgebildet ist, basierend auf der Rotationsklassifikation (134) eine Sortierung des gegriffenen Werkstücks (105) innerhalb der Mehrzahl von Werkstücken (105) auszulösen.

2. Greifsystem (100) gemäß Anspruch 1, wobei die Mehrzahl von Rotationsparametern (132) eine Mehrzahl von Massenträgheitsmomenten, insbesondere axialen Massenträgheitsmomenten, des jeweils gegriffenen Werkstücks (105) umfasst.

3. Greifsystem (100) gemäß Anspruch 1 oder 2, wobei die Zuordnung der Rotationsparameter (132), die vorbestimmten Referenzaufnahmepunkte (112, 113) und/oder die vorbestimmten Referenzbewegungen (118) in einem Speichermodul (238) der Steuereinheit (130) hinterlegt sind.

4. Greifsystem (100) gemäß mindestens einem der vorhergehenden Ansprüche, wobei das Auslösen der Sortierung eine Steuerung des computergesteuerten Greifarms (110) derart umfasst, dass der computergesteuerte Greifarm (110) das gegriffene Werkstück (105) an einer der Rotationsklassifikation (134) zugeordneten Position (242) in einer Umgebung des computergesteuerten Greifarms (110) ablegt.

5. Greifsystem (100) gemäß Anspruch 4, weiterhin aufweisend ein Ablagepalettensystem (240), wobei die zugeordnete Position (242) in der Umgebung des computergesteuerten Greifarms (110) mindestens eine Palette (244) innerhalb des Ablagepalettensystems (240) indiziert.

6. Greifsystem (100) gemäß mindestens einem der vorhergehenden Ansprüche, wobei das Auslösen der Sortierung eine Kennzeichnung des entsprechenden Werkstücks (105) mit einer digitalen Signatur (350), insbesondere einer eindeutigen digitalen Signatur, umfasst.

7. Greifsystem (100) gemäß mindestens einem der vorhergehenden Ansprüche, wobei die Steuereinheit (330) weiter ausgebildet ist, basierend auf Daten eines optischen Sensors (339) des Greifsystems (100) eine synchrone Abfolge der vorbestimmten Referenzbewegungen (118) durch den computergesteuerten Greifarm (110) zu prüfen und bei der Bestimmung der Mehrzahl von Rotationsparametern (132) des Werkstücks (105) zu berücksichtigen.

8. Greifsystem (100) gemäß mindestens einem der vorhergehenden Ansprüche, wobei die in den computergesteuerten Greifarm (110) integrierte Greifsensorik (120) eine Kraft-Moment-Sensorik umfasst.

9. Verwendung des Greifsystems (100) gemäß einem der vorhergehenden Ansprüche bei der Fertigung einer Windkraftanlage (375), insbesondere bei der Fertigung einer Gondel und/oder eines Rotors einer Windkraftanlage (375).

10. Verfahren (400) zum Sortieren einer Mehrzahl von Werkstücken (105), aufweisend die Schritte
- Bereitstellen eines computergesteuerten Greifarms (110) zum Greifen eines Werkstücks (105) und einer damit signaltechnisch verbundenen Steuereinheit (130) zum Steuern des computergesteuerten Greifarms (110);
- Greifen des Werkstücks (105) über mindestens zwei vorbestimmte Referenzaufnahmepunkte (112, 113) basierend auf einer optischen Erkennung des Werkstücks (105);
- Ausführen einer Mehrzahl von vorbestimmten Referenzbewegungen (118);
- Aufnehmen und Ausgeben von Rotationsdaten (122) über eine in dem computergesteuerten Greifarm (110) integrierte Greifsensorik (120) während einer Ausführung der Referenzbewegungen (118);
- Bestimmen einer Mehrzahl von Rotationsparametern (132) des Werkstücks (105) basierend auf den ausgegebenen Rotationsdaten (122);
- Zuordnen einer Rotationsklassifikation (134) zu dem Werkstück (105) basierend auf der Mehrzahl von Rotationsparametern (132); und
- Auslösen einer Sortierung des gegriffenen Werkstücks (105) basierend auf der Rotationsklassifikation (134).

11. Verfahren (400) gemäß Anspruch 10, wobei das Auslösen der Sortierung ein Ablegen des gegriffenen Werkstücks (105) an einer der Rotationsklassifikation (134) zugeordneten Position (242) in einer Umgebung des computergesteuerten Greifarms (110) umfasst.

12. Verfahren (100) gemäß Anspruch 10 oder 11, wobei für einen weiteren Fertigungsprozess stets zusammensortierte Werkstücke (105) aus der Mehrzahl von Werkstücken (105), insbesondere Werkstücke (105) mit einer im Wesentlichen gleichen Rotationsklassifikation (134), gemeinsam für eine Fertigung eines aus den zusammensortierten Werkstücken (105) zumindest teilweise gebildeten Erzeugnisses (370) verwendet werden.

13. Computerprogramm mit einem Programmcode zur Durchführung eines Verfahrens gemäß Anspruch 10, wenn der Programmcode auf einem Computer, einem Prozessor oder einer programmierbaren Hardwarekomponente ausgeführt wird.
